# EUROPEAN PATENT APPLICATION

(11) **EP 2 366 568 A1**
(43) Date of publication of application: **21.09.2011**
(21) Application number: 11154340.1
(22) Date of filing: 14.02.2011
(51) Int. Cl.: B60H 1/00, H01M 10/50

(54) **Vehicle air conditioner**

(30) Priority: 02.03.2010 JP 2010045765
(71) Applicant: Kabushiki Kaisha Toyota Jidoshokki, Kariya-shi, Aichi 448-8671 (JP)
(72) Inventor: Akiyama, Hirokuni, Kariya-shi Aichi 448-8671 (JP); Kubo, Hidehito, Kariya-shi Aichi 448-8671 (JP); Yokomachi, Naoya, Kariya-shi Aichi 448-8671 (JP); Kawaguchi, Masahiro, Kariya-shi Aichi 448-8671 (JP)
(74) Representative: TBK

(57) **Abstract**

A vehicle air conditioner includes a first heat storage device having a first heat storage medium, a battery disposed under a floor of a compartment of a vehicle on a chassis side and a heat insulator covering the first heat storage device for insulating. The first heat storage device is disposed on and thermally connected to the battery.

## Description

### BACKGROUND OF THE INVENTION

The present invention relates to a vehicle air conditioner.

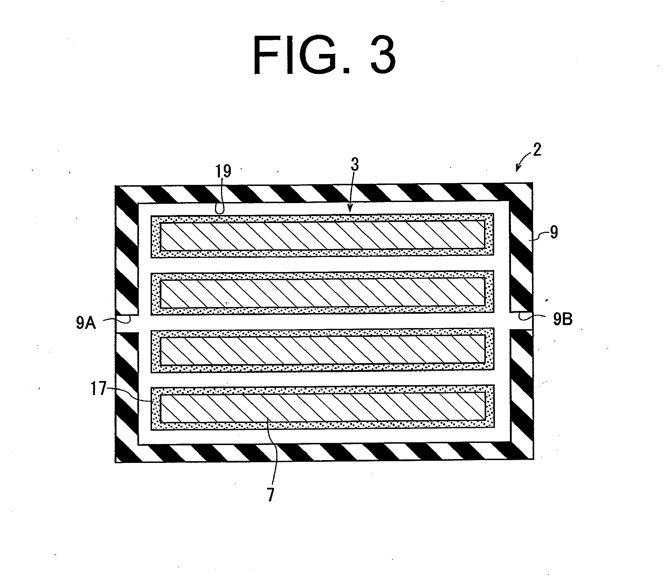

A vehicle air conditioner is disclosed in Japanese Application Publication 2009-193832 which employs a refrigerant circuit including an electric compressor, a condenser, an expansion valve and an evaporator. The vehicle is equipped with a battery package disclosed in FIG. 3 of the above Publication in addition to the vehicle air conditioner. The battery package includes a battery for driving the vehicle and a heat storage device that is disposed under the battery and has heat storage medium.

Air conditioning of the vehicle compartment is performed by the above vehicle air conditioner. The heat storage device cools the battery thereby to prolong the battery life. Furthermore, air cooled by the vehicle air conditioner is also supplied to the heat storage device thereby to cool the heat storage medium, so that the battery can be cooled for a longer time. Air that is supplied to the battery and the heat storage device flows out of the vehicle.

In the vehicle employing the above vehicle air conditioner, however, air-conditioning of the compartment is performed only by the refrigerant circuit, so that electric power is constantly consumed for air-conditioning. This problem leads to a decreased traveling distance for a vehicle that is driven only by a battery.

Furthermore, since the battery is heavy, the vehicle driving performance may be affected depending on the disposition of the battery. In light of this, it is preferable that the battery should be disposed under a floor of a compartment of the vehicle so as to lower the center of the gravity of the vehicle. However, in the above vehicle air conditioner wherein the battery is located above the heat storage device, it is difficult to remove the battery from the vehicle.

The present invention is directed to providing a vehicle air conditioner that allows a vehicle to drive at a high performance, a battery to be removed easily and a vehicle compartment to be air-conditioned effectively.

### SUMMARY OF THE INVENTION

A vehicle air conditioner includes a first heat storage device having a first heat storage medium, a battery disposed under a floor of a compartment of a vehicle on a chassis side and a heat insulator covering the first heat storage device for insulating. The first heat storage device is disposed on and thermally connected to the battery.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic cross sectional configuration view showing an air conditioner mounted on a vehicle according to a first through third and an alternative embodiments of the present invention;
FIG. 2 is a schematic configuration diagram showing the vehicle air conditioner according to the first embodiment;
FIG. 3 is a schematic cross sectional view taken along line A-A' of FIG. 1,showing a battery package according to the first embodiment;
FIG. 4 is a schematic configuration diagram of a vehicle air conditioner according to the first embodiment, showing a state of the air conditioner when the vehicle is driving in a hot environment;
FIG. 5 is a schematic configuration diagram similar to FIG. 4, but showing a state of the air conditioner when the vehicle is driving in a cold environment;
FIG. 6 is a schematic configuration diagram of a vehicle air conditioner according to the second embodiment, showing a state of the air conditioner when the vehicle is driving;
FIG. 7 is a schematic configuration diagram of a vehicle air conditioner according to the third embodiment, showing a state of the air conditioner when the vehicle is driving;
FIG. 8 is a schematic cross sectional configuration view of a vehicle air conditioner according to a fourth embodiment, showing the air conditioner mounted on a vehicle;
FIG. 9 is a schematic configuration diagram showing a vehicle air conditioner according to an alternative embodiment;
FIG. 10 is a schematic cross sectional view taken along line A-A' of FIG. 1, showing a battery package of the vehicle air conditioner according to the alternative embodiment; and
FIGS. 11A and 11B are schematic cross sectional configuration views showing an example of a battery package mounted on a vehicle.

### DETAILED DESCRIPTION OF THE PREFERRED EMBODIMENT

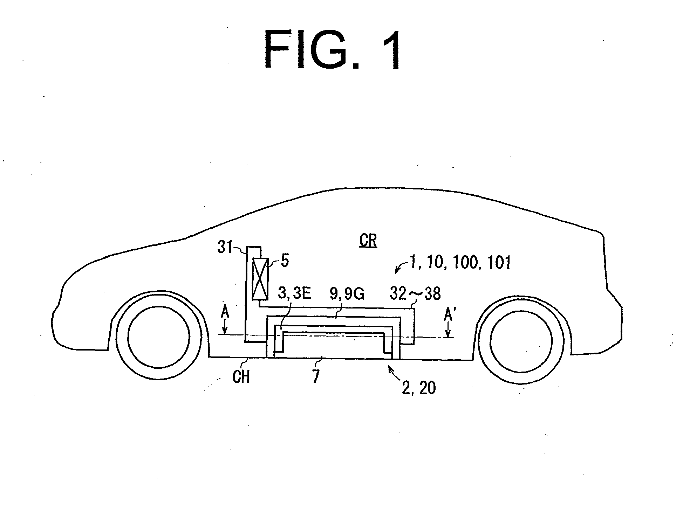

The following will describe the vehicle air conditioner according to the first through fourth and alternative embodiments with reference to FIGS. 1 through 11. Referring firstly to FIG. 1, the vehicle air conditioner is designated by 1, 10, 100, 101 for the first through third and alternative embodiments, respectively, and mounted on a hybrid vehicle or an electric vehicle (a part of the vehicle air conditioner 1, 10, 100, 101 is omitted from the drawing of FIG. 1).

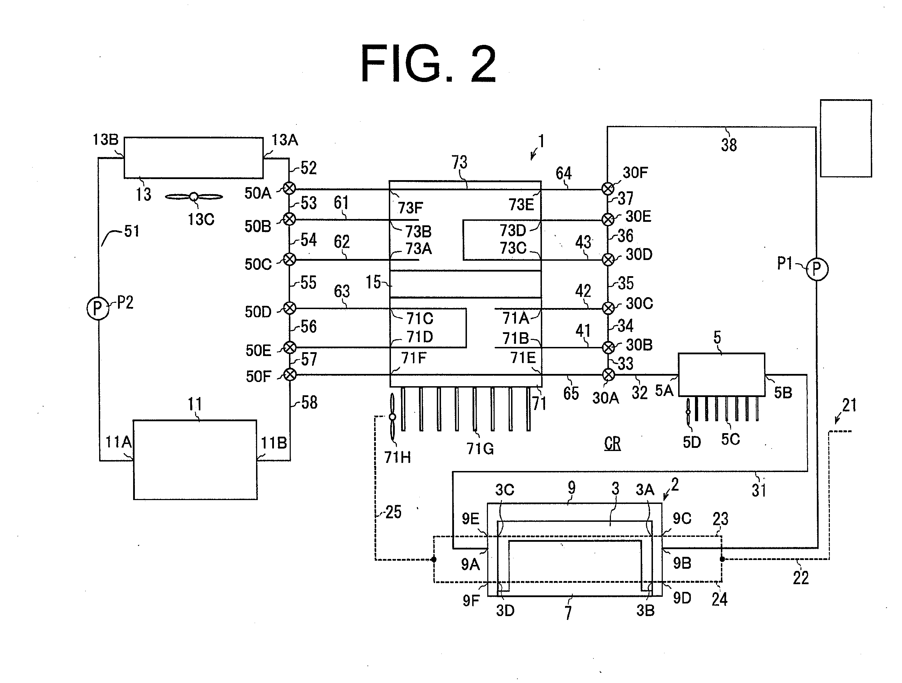

As shown in FIG. 2, the vehicle air conditioner 1 according to the first embodiment includes a first heat storage device 3, a heater core 5, a battery 7, a vacuum heat insulator 9 as a heat insulator, a vehicle system 11, a radiator 13 and a Peltier device 15.

As shown in FIG. 1, the first heat storage device 3 is disposed under the floor of a vehicle, specifically, between the floor of the vehicle compartment CR and the chassis CH. It is noted that the floor of the vehicle refers to the floor of the vehicle compartment. As shown in FIG. 3, the first heat storage device 3 has therein a heat storage medium 17 and the outer periphery of the first heat storage device 3 is covered with the vacuum heat insulator 9 for insulating. The heat storage medium 17 stores an amount of heat that can keep the battery 7 warm between 15°C and 35°C when the battery 7 is generating heat. The heat storage medium 17 is made of a paraffin and the like. The first heat storage device 3 has formed therein a plurality of passages 19 through which water as a heat exchange medium circulates. The heat storage medium 17 can store heat effectively from water flowing through the passages 19. As shown in FIG. 2, the first heat storage device 3 has ports 3A through 3D through which air ducts 23, 24 which will be described later are inserted. The heat storage medium 17 corresponds to a first heat storage medium.

As shown in FIG. 1, the battery 7 is disposed under the floor of the compartment CR on the chassis CH side and the first heat storage device 3 is disposed on the battery 7 on the compartment CR side. As shown in FIG. 3, a plurality of small batteries 7 forming the battery 7 are disposed in the first heat storage device 3 and each small battery 7 is covered with the heat storage medium 17. As shown in FIGS. 1 and 2, each battery 7 is formed on the chassis side CH thereof with protruding portions which prevent the outer surface of the first heat storage device 3 from being exposed to the outside of the vehicle. The battery 7 is electrically connected to a control device (not shown) and supplies electric power to a motor for driving the vehicle and other devices through the control device. The rest of the structure of the battery 7 is the same as that of a conventional battery and the description of such structure will be omitted. The battery 7 may be provided by a single battery. Instead of covering around the battery 7, the heat storage medium 17 may be only disposed on the battery 7.

As shown in FIG. 3, the vacuum heat insulator 9 has a first outlet 9A and a first inlet 9B communicating with the passages 19 in the first heat storage device 3. As shown in FIG. 2, the air ducts 23, 24 are inserted through the vacuum heat insulator 9. The vacuum heat insulator 9 has ports 9C through 9F communicating with the ports 3A through 3D that the first heat storage device 3 has, respectively. The first heat storage device 3, the battery 7 and the vacuum heat insulator 9 cooperate to form the battery package 2.

An air duct 21 is provided in the battery package 2 for connecting the battery package 2 and the compartment CR. One end of the air duct 22 opens outside the vehicle and the other end thereof is bifurcated into the air duct 23 that is formed in the first heat storage device 3 and inserted through the ports 3A, 3C, 9C, 9E and the air duct 24 that is formed in the battery 7 and inserted through the ports 3B, 3D, 9D, 9F. The air ducts 23, 24 join together into an air duct 25 that opens at a position adjacent to an electric blower 71 H. The air ducts 22 through 25 cooperate to form the air duct 21. The respective air duct corresponds to an air passage.

The heater core 5 has a second outlet 5A through which water flows out and a second inlet 5B through which water flows in. The heater core 5 also has air-cooling fins 5C formed integrally with the heater core 5 and an electric blower 5D is provided adjacent to the air-cooling fins 5C. The electric blower 5D is electrically connected to the control device (not shown). Air around the air-cooling fins 5C is supplied into the compartment CR by the electric blower 5D. The heater core 5 corresponds to an in-vehicle heat exchanger according to an aspect of the present invention.

The battery package 2 is connected to the heater core 5 by tubes 31 through 38. As shown in FIG. 2, three-way valves 30A through 30F as a branch valve are provided between any two adjacent tubes 32 through 38, respectively, for connecting one tube and another tube that is selected from plural tubes. The three-way valves 30A through 30F are electrically connected to the control device (not shown).

The following will describe the connection among the tubes 31 through 38. The first outlet 9A of the vacuum heat insulator 9 is connected to the second inlet 5B of the heater core 5 through the tube 31. The tube 32 is connected at one end thereof to the second outlet 5A of the heater core 5 and at the other end thereof to the tube 33 through the three-way valve 30A. The tube 33 is connected to the tube 34 through the three-way valve 30B. The tube 34 is connected to the tube 35 through the three-way valve 30C. The tube 35 is connected to the tube 36 through the three-way valve 30D. The tube 36 is connected to the tube 37 through the three-way valve 30E. The tube 37 is connected to the tube 38 through the three-way valve 30F. The tube 38 is connected to the first inlet 9B of the vacuum heat insulator 9.

The tubes 33, 34 are connected to the tube 41 through the three-way valve 30B. The tubes 34, 35 are connected to the tube 42 through the three-way valve 30C. The tubes 35 through 37 are connected to the tube 43 through the three-way valves 30D, 30E, as shown in FIG. 2. Water circulates through the tubes 31 through 38 and 41 through 43. A first pump P1 is provided in the tube 38 for circulating water through the tubes 31 through 38 and 41 through 43. The first pump P1 is electrically connected to the control device (not shown). The tubes 31 through 38 and 41 through 43 correspond to an in-vehicle circuit according to an aspect of the present invention.

The vehicle system 11 includes various heat-generating components such as a hybrid engine, an inverter, a motor, a converter and a transmission. The vehicle system 11 has formed therein a water jacket (not shown) having a third outlet 11A through which water flows out and a third inlet 11 B through which water flows in.

The radiator 13 has a fourth outlet 13A through which water flows out and a fourth inlet 13B through which water flows in. An electric blower 13C is provided adjacent to the radiator 13 and electrically connected to the control device (not shown). By operating the electric blower 13C, air around the radiator 13 is blown out of the vehicle and heat exchanging with the heat out of the vehicle is performed thereby to heat or cool water in the radiator 13. The radiator 13 corresponds to an out-vehicle heat exchanger according to an aspect of the present invention.

The vehicle system 11 is connected to the radiator 13 through tubes 51 through 58. Three-way valves 50A through 50F are provided between any two adjacent tubes, respectively, as shown in FIG. 2. The three-way valves 50A through 50F are electrically connected to the control device (not shown). The three-way valves 30A through 30F, 50A through 50F correspond to a transfer valve according to an aspect of the present invention.

The following will describe the connection among the tubes 51 through 58. The third outlet 11A of the vehicle system 11 is connected to the fourth inlet 13B of the radiator 13 through the tube 51.

The tube 52 is connected at one end thereof to the fourth outlet 13A of the radiator 13 and at the other end thereof to the tube 53 through the three-way valve 50A. The tube 53 is connected to the tube 54 through the three-way valve 50B. The tube 54 is connected to the tube 55 through the three-way valve 50C. The tube 55 is connected to the tube 56 through the three-way valve 50D. The tube 56 is connected to the tube 57 through the three-way valve 50E. The tube 57 is connected to the tube 58 through the three-way valve 50F. The tube 58 is connected to the third inlet 11 B of the vehicle system 11.

The tubes 53, 54 are connected to the tube 61 through the three-way valve 50B and the tubes 54, 55 are connected to the tube 62 through the three-way valve 50C. The tubes 55 through 57 are connected to the tube 63 through the three-way valves 50D, 50E, as shown in FIG. 2. Water circulates through the tubes 51 through 58 and 61 through 63. A second pump P2 is provided in the tube 51 for circulating water through the tubes 51 through 58 and 61 through 63. The second pump P2 is electrically connected to the control device (not shown). The tubes 51 through 58 and 61 through 63 correspond to an out-vehicle circuit according to an aspect of the present invention.

The tubes 52, 53 are connected to one end of the tube 64 through the three-way valve 50A. The other end of the tube 64 is connected to the tubes 37, 38 through the three-way valve 30F. The tubes 57, 58 are connected to one end of the tube 65 through the three-way valve 50F. The other end of the tube 65 is connected to the tubes 32, 33 through the three-way valve 30A. The tubes 64, 65 correspond to a first connection circuit according to an aspect of the present invention. The first connection circuit connects the in-vehicle circuit and the out-vehicle circuit. The three-way valves 30A, 50A, 30F, 50F as a transfer valve circulate or stop the heat exchange medium in the first connection circuit.

The Peltier device 15 is electrically connected to the control device (not shown) that is operable to switch the Peltier device 15 between the heat absorption side and the heat release side. A first heat exchanger 71 is provided on one side of the Peltier device 15 and a second heat exchanger 73 is provided on the other side of the Peltier device 15.

The first heat exchanger 71 is filled with water and has a fifth outlet 71A and a fifth inlet 71 B. The tube 41 is connected to the fifth inlet 71 B and the tube 42 is connected to the fifth outlet 71A. The first heat exchanger 71 has ports 71C through 71 F through which the tubes 63, 65 are inserted, as shown in FIG. 2. The tube 63 that is inserted through the port 71C is bent in a U-shaped manner so as to be inserted through the port 71 D, as shown in FIG. 2, so that no water in the tube 63 is mixed with water in the first heat exchanger 71. Additionally, the tube 65 is inserted through the ports 71 E, 71 F so as to pass through the first heat exchanger 71, so that no water in the tube 65 is mixed with water in the first heat exchanger 71.

The first heat exchanger 71 has air-cooling fins 71 G formed integrally therewith and an electric blower 71 H is provided adjacent to the air-cooling fins 71 G. The electric blower 71 H is electrically connected to the control device (not shown). Air outside the vehicle is introduced into the compartment CR through the air duct 21 by operating the electric blower 71H.

The second heat exchanger 73 is also filled with water and has a sixth outlet 73A and a sixth inlet 73B. The tube 61 is connected to the sixth inlet 73B and the tube 62 is connected to the sixth outlet 73A. The second heat exchanger 73 has ports 73C through 73F through which the tubes 43, 64 are inserted, as shown in FIG. 2. The tube 43 that is inserted through the port 73C is bent in a U-shaped manner so as to be inserted through the port 73D, as shown in FIG. 2, so that no water in the tube 43 is mixed with water in the second heat exchanger 73. Additionally, the tube 64 is inserted through the ports 73E, 73F so as to pass through the second heat exchanger 73, no water in the tube 64 is mixed with water in the second heat exchanger 73.

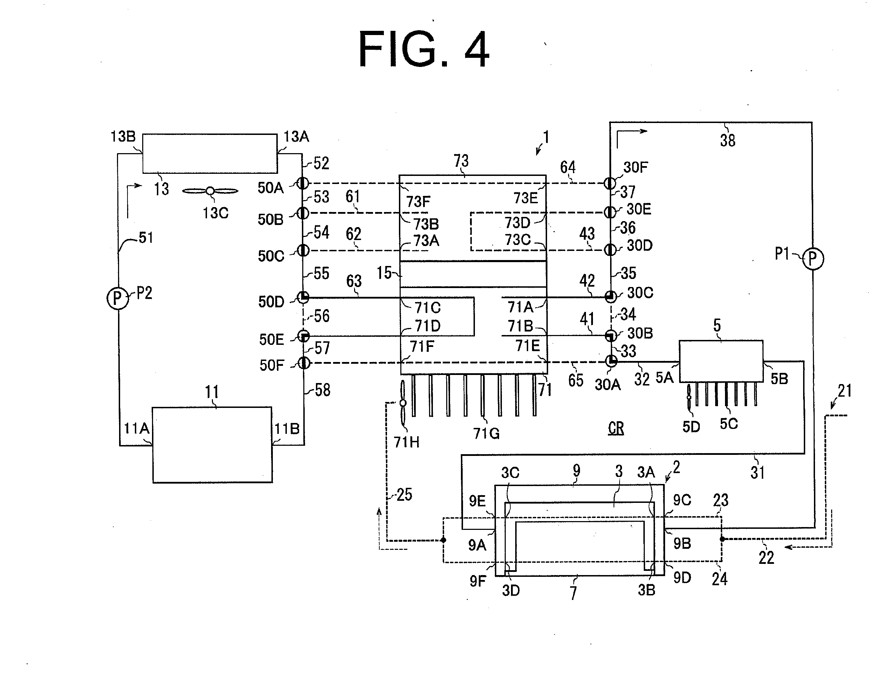

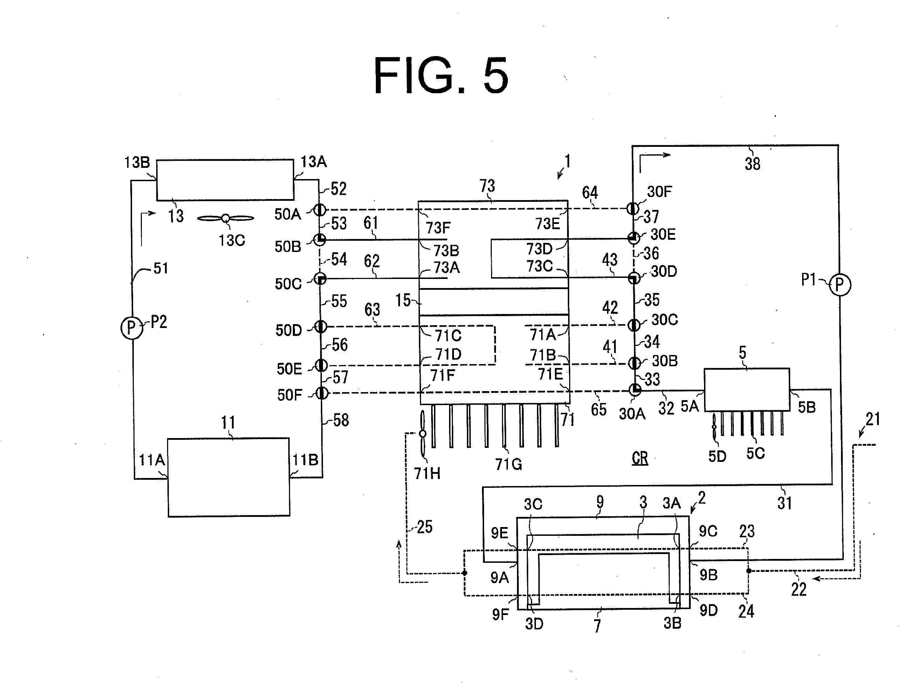

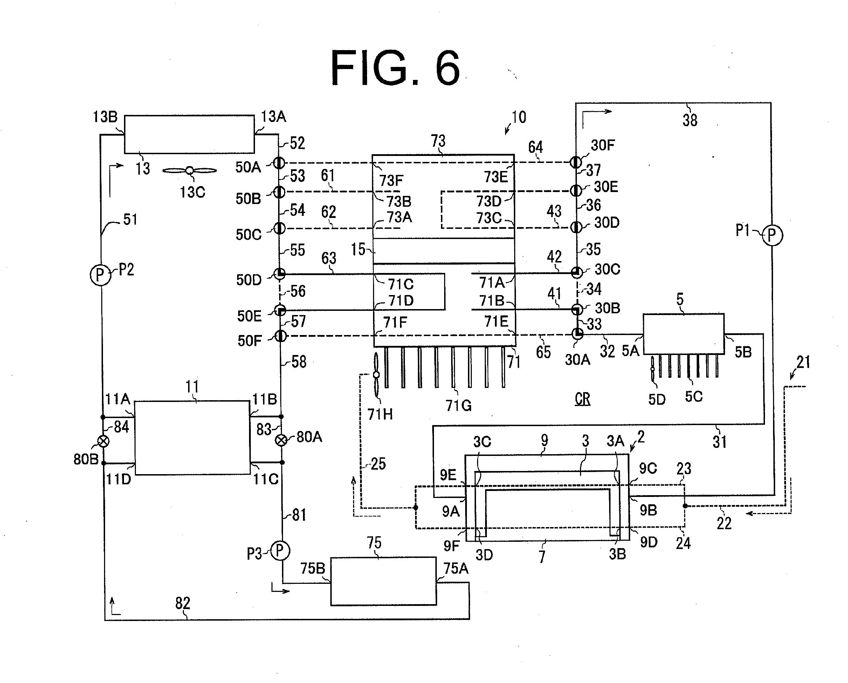

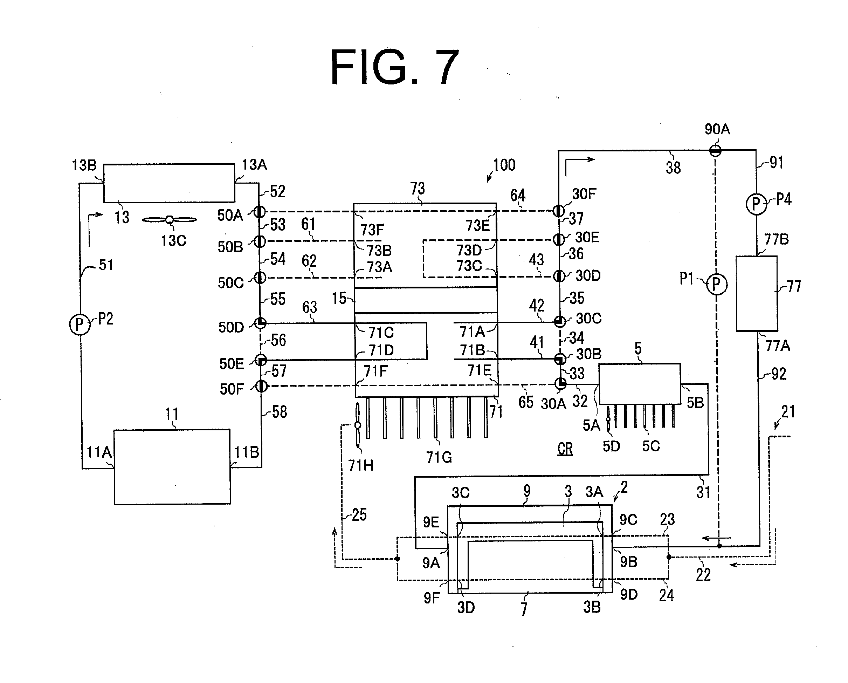

The above vehicle air conditioner 1 is operable to keep warm the battery 7 and to air-condition the vehicle compartment CR in hot or cold environment as will be described below. FIG. 4 shows the schematic configuration diagram of the vehicle air conditioner 1 when the vehicle is driving in a hot environment. FIG. 5 shows the schematic configuration diagram of the vehicle air conditioner 1 when the vehicle is driving in a cold environment. Solid arrows and dashed arrows in FIGS. 4, 5 indicate the directions of water flowing and air flowing in the vehicle air conditioner 1, respectively. The same is true of FIGS. 6 and 7.

### (Hot environment)

In a hot environment, the control device controls the operation of the Peltier device 15 in such a way that the first and the second heat exchangers 71, 73 are set for the heat absorption and the heat release, respectively, as shown in FIG. 4. In this case, the temperature of the Peltier device 15 on the heat absorption side thereof is set between 7°C and 15°C so that the battery 7 in service and generating heat is kept warm between 15°C and 35°C. In this case, a part of heat stored in the heat storage medium 17 is supplied therefrom to the compartment CR.

The control device also operates to set the respective three-way valves 30A through 30F in specified positions for connection or disconnection of the respective tubes 32 through 38, 41 through 43, 64 and 65. Specifically, the three-way valve 30A is set for connection between the tube 32 and the tube 33 and for disconnection of the tubes 32, 33 from the tube 65. The three-way valve 30B is set for connection between the tube 33 and the tube 41 and for disconnection of the tubes 33, 41 from the tube 34. The three-way valve 30C is set for connection between the tube 35 and the tube 42 and for disconnection of the tubes 35, 42 from the tube 34. The three-way valves 30D, 30E is set for connection of the tubes 35 through 37 and for disconnection of the tubes 35 through 37 from the tube 43. The three-way valve 30F is set for connection between the tube 37 and the tube 38 and for disconnection of the tubes 37, 38 from the tube 64.

The control device also controls the operation of the three-way valves 50A through 50F to switch between connection and disconnection of the tubes 52 through 58, 61 through 65. Specifically, the three-way valve 50A is set for connection between the tube 52 and the tube 53 and for disconnection of the tubes 52, 53 from the tube 64. The three-way valve 50B is set for connection between the tube 53 and the tube 54 and for disconnection of the tubes 53, 54 from the tube 61. The three-way valve 50C is set for connection between the tube 54 and the tube 55 and for disconnection of the tubes 54, 55 from the tube 62. The three-way valves 50D, 50E is set for connection between the tubes 55, 57 and the tube 63 and for disconnection of the tubes 55, 57 from the tube 56. The three-way valve 50F is set for connection between the tube 57 and the tube 58 and for disconnection of the tubes 57, 58 from the tube 65.

The control device also operates the first and the second pumps P1, P2 and the electric blowers 5D, 13C, 71 H. Accordingly, in the vehicle air conditioner 1, cooled water in the first heat exchanger 71 flows from the fifth outlet 71A through the tube 42 to the first inlet 9B of the vacuum heat insulator 9. By storing the heat of the cooled water, the heat storage medium 17 of the first heat storage device 3 can cool the battery 7 in service and generating heat thereby to keep warm the battery 7 between 15°C and 35°C. Then, water flows from the first outlet 9A of the vacuum heat insulator 9 into the heater core 5 through the second inlet 5B thereof and heat exchanging is performed in the heater core 5 between water and air around the heater core 5 thereby to cool the air around the heater core 5 and to heat the water. Cooled air around the heater core 5 is supplied to the vehicle compartment CR thereby to air-condition the compartment CR. Then, water flows to the first heat exchanger 71 through the tube 41 and is cooled again in the first heat exchanger 71.

The electric blower 71 H then operating in the vehicle air conditioner 1 draws air outside the vehicle to the vicinity of the first heat exchanger 71 through the air ducts 22 through 25. Air then passes through the battery package 2 and, therefore, the temperature of the air is substantially the same as that of the inside of the battery package 2. Since the vicinity of the first heat exchanger 71 is cooled further by the water cooled in the first heat exchanger 71, the air thus cooled further is supplied to the compartment CR. Continuing to operate the electric blower 5D after the compartment CR has been cooled to a certain level, air conditioning of the compartment CR can be maintained.

Exhaust heat generated in the vehicle system 11 is transferred to the radiator 13 by water flowing from the third outlet 11A of the vehicle system 11 into the radiator 13 through the fourth inlet 13B. Water is cooled in the radiator 13 by releasing its exhaust heat outside the vehicle. Water cooled in the radiator 13 flows out from the fourth outlet 13A into the tube 63. While flowing through the tube 63, water flowing through the tube 63 is cooled further in the first heat exchanger 71 and then flows into the vehicle system 11 through the third inlet 11B. On the other hand, heat released in the second heat exchanger 73 is discharged outside the vehicle by an electric blower (not shown).

### (Cold environment)

As shown in FIG. 5, in a cold environment, the control device control the operation of the Peltier device 15 in such a way that the first and the second heat exchangers 71, 73 are set for the heat release and the heat absorption, respectively. In this case, the temperature on the heat absorption side of the Peltier device 15 can be kept between 7°C and 15°C by setting the temperature on the heat release side between 40°C and 60°C.

The control device operates to set the respective three-way valves 30A through 30F in specified positions for connection or disconnection of the respective tubes 32 through 38, 41 through 43, 64 and 65. Specifically, the three-way valve 30A is set for connection between the tube 32 and the tube 33 and for disconnection of the tubes 32, 33 from the tube 65. The three-way valve 30B is set for connection between the tube 33 and the tube 34 and for disconnection of the tubes 33, 34 from the tube 41. The three-way valve 30C is set for connection between the tube 34 and the tube 35 and for disconnection of the tubes 34, 35 from the tube 42. The three-way valves 30D, 30E are set for connection between the tubes 35, 37 and the tube 43 and for disconnection of the tubes 35, 37 from the tube 36. The three-way valve 30F is set for connection between the tube 37 and the tube 38 and for disconnection of the tubes 37, 38 from the tube 64.

The control device also controls the operation of the three-way valves 50A through 50F to switch between connection and disconnection of the tubes 52 through 58, 61 through 65. Specifically, the three-way valve 50A is set for connection between the tube 52 and the tube 53 and for disconnection of the tubes 52, 53 from the tube 64. The three-way valve 50B is set for connection between the tube 53 and the tube 61 and for disconnection of the tubes 53, 61 from the tube 54. The three-way valve 50C is set for connection between the tube 55 and the tube 62 and for disconnection of the tubes 55, 62 from the tube 54. The three-way valves 50D, 50E are set for connection of the tubes 55 through 57 and for disconnection of the tubes 55, 57 from the tube 63. The three-way valve 50F is set for connection between the tube 57 and the tube 58 and for disconnection of the tubes 57, 58 from the tube 65.

As in the case of the hot environment, the control device also operates the first and the second pumps P1, P2 and the electric blowers 5D, 13C, 71 H. The water in the tube 43 is cooled by the water in the second heat exchanger 73 in the vehicle air conditioner 1 and flows to the first inlet 9B. In cold environment, therefore, the battery 7 can be kept warm between 15°C and 35°C. Air flowing through the air ducts 22 through 25 is heated further by warm air around the first heat exchanger 71 and supplied to the vehicle compartment CR. Thus, warming the compartment CR is performed. As in the case of cooling, after the compartment CR has been heated to a certain level, the air-conditioning of the compartment CR can be maintained by supplying air around the heater core 5 to the compartment CR. Then, the water in the heater core 5 can be heated.

Water that is cooled in the second heat exchanger 73 flows through the tube 62 from the sixth outlet 73Ato the third inlet 11B of the vehicle system 11. Thus, the vehicle system 11 can be also cooled.

In this state shown in FIG. 5 of the vehicle air conditioner 1, the control device controls the operation of the three-way valves 30B through 30F, 50 B through 50F for connection or disconnection of the respective tubes 32 through 38, 41 through 43, 52 through 58, 61 through 65. When the vehicle is started in a cold environment after the vehicle has been parked outdoors for a long time, the temperature of the battery 7 can be raised and the vehicle system 11 can be also heated. Thus, the battery 7 and the vehicle system 11 can be operated effectively.

The tubes 37, 38 can be connected to the tubes 52, 53 by controlling the three-way valves 30F, 50A in the vehicle air conditioner 1. Similarly, the tubes 32, 33 can be connected to the tubes 57, 58 by controlling the three-way valves 30A, 50F. Thus, water can be heated or cooled by connecting the in-vehicle circuit and the out-vehicle circuit.

In the vehicle air conditioner 1 according to the above embodiment wherein the first heat storage device 3 is disposed on and thermally connected to the battery 7, the battery 7 can be heated or cooled by the heat on outer peripheral surface of the first heat storage device 3. Since the temperature of the battery 7 can be kept at a proper level, the driving performance of the vehicle can be maintained.

In the vehicle air conditioner 1 according to the above embodiment wherein the battery 7 is disposed in the battery package 2 between the outer surface of the first heat storage device 3 and the outside of the vehicle, the heat of the first heat storage device 3 is blocked by the battery 7, so that the heat is not easily released from the outer surface of the first heat storage device 3 to the outside of the vehicle. Therefore, the vacuum heat insulator 9 on the chassis CH side can be made thin. The compartment CR side of the battery package 2 is not directly exposed to the outside of the vehicle, so that the vacuum heat insulator 9 on the compartment CR side can be made thin. This can reduce the weight and the manufacturing cost of the vehicle air conditioner 1.

Since the battery 7 is disposed under the floor of the compartment CR on the chassis CH side, heat radiated from the heat storage medium 17 of the first heat storage device 3 can be supplied into the vehicle compartment CR from under the floor of the compartment CR. Additionally, since the vacuum heat insulator 9 is made thin as described previously, heat stored in the heat storage medium 17 can be supplied into the compartment CR effectively through the thin vacuum heat insulator 9. Thus, the vehicle air conditioner 1 can air-condition the compartment CR efficiently.

Heat is exchanged between water and the heat storage medium 17 and water circulates between the first heat storage device 3 (battery package 2) and the heater core 5 through the tubes 31 through 35 and 41 through 43 in the vehicle air conditioner 1. In the vehicle air conditioner 1, therefore, the heater core 5 can cool water by absorbing its heat thereby to cool the heat storage medium 17 and also the heater core 5 can heat water by releasing its heat to water thereby to heat the heat storage medium 17. As compared with a conventional vehicle air conditioner using only the refrigerant circuit, the vehicle air conditioner 1 of the above embodiment of the present invention can save energy in air-conditioning of a vehicle compartment. Therefore, the vehicle air conditioner 1 helps to increase the traveling distance of a car that is driven solely by a battery.

By arranging the battery package 2 of the vehicle air conditioner 1 under the floor of the compartment CR, as shown in FIG. 1, the battery 7 is disposed adjacent to the outside of the vehicle, i.e., on the chassis (CH) side, so that the gravity center of the vehicle can be lowered. Furthermore, the above arrangement of the battery package 2 makes it easy to remove the battery 7 from the vehicle.

Thus, the vehicle air conditioner 1 according to the present invention can improve the driving performance, allow the battery 7 to be removed from the vehicle easily and air-condition the compartment CR effectively.

Since the first heat storage device 3 and the battery 7 of the vehicle air conditioner 1 are covered with the vacuum heat insulator 9, the temperature of the battery 7 can be kept constant for a long time. Therefore, the problem of the battery being heated by the ambient temperature after the vehicle has been parked outdoors for a long time in a hot environment is prevented. Similarly, the problem of the battery being cooled by the ambient temperature after the vehicle has been parked outdoors for a long time in a cold environment is also prevented. Therefore, the quantity of the heat storage medium 17 to use in the first heat storage device 3 needs not to be increased unnecessarily and the vehicle air conditioner 1 prevents increasing of the weight and the manufacturing cost of the vehicle.

In the vehicle conditioner 1, it is preferable that the heat storage medium 17 stores heat at a room temperature. The range of the room temperature is between 15°C and 35°C.

In the vehicle air conditioner 1 wherein the battery 7 of the vehicle air conditioner 1 is kept warm between 15°C and 35°C by the heat stored in the heat storage medium 17, the battery 7 can be operated effectively without being affected by the temperature change of the battery 7. The heat stored by the heat storage medium 17 in the above temperature range reduces the temperature difference between the outer peripheral surface of the first heat storage device 3 and the vehicle compartment CR. Therefore, the vacuum heat insulator 9 on the compartment CR side can be made thinner.

Furthermore, air-conditioning of the compartment CR can be maintained by the heat supplied from the heat storage medium 17 provided under the floor of the compartment CR and air that is supplied from the heater core 5 into the compartment CR.

The use of the Peltier device 15 as a means for heating or cooling water contributes to energy saving of the vehicle air conditioner 1. Furthermore, the Peltier device 15 may only be operated so as to keep the battery 7 warm between 15°C and 35°C, further energy saving can be accomplished. Additionally, the ease of switching between the heat absorption side and the heat release side of the Peltier device 15 and of controlling the temperature of the heat absorption side and the heat release side simplifies the structure of the vehicle air conditioner 1.

The following will describe a vehicle air conditioner according to the second embodiment of the present invention with reference to FIG. 6. The vehicle air conditioner according to the second embodiment designated by numeral 10 differs from the vehicle air conditioner 1 according to the first embodiment in that a second heat storage device 75 is added to the vehicle air conditioner 1 and a seventh outlet 11C through which water flows out and a seventh inlet 11 D through which water flows in are formed in the water jacket (not shown) of the vehicle system 11.

The second heat storage device 75 has therein a heat storage medium (not shown) thereby to exchange heat between the heat storage medium and the heat exchange medium and has formed therein an eighth outlet 75A through which water flow out and an eighth inlet 75B through which water flows in. Alternatively, a plurality of second heat storage devices such as 75 may be provided at different positions in the vehicle. The second heat storage device 75 can be disposed under the floor of the compartment CR or in a trunk room. The second heat storage device 75 may be covered with a vacuum heat insulator depending on the location where the second heat storage device 75 is disposed. The heat storage medium in the second heat storage device 75 corresponds to a second heat storage medium.

The vehicle system 11 and the second heat storage device 75 are connected each other through tubes 81, 82. Specifically, the seventh outlet 11C is connected to the eighth inlet 75B through the tube 81 and the eighth outlet 75A is connected to the seventh inlet 11 D through the tube 82. Water flows through the tubes 81, 82. A third pump P3 is provided in the tube 81 for circulating water and electrically connected to the control device (not shown). Alternatively, the third pump P3 may be provided in the tube 82. The tubes 81, 82 correspond to a heat storage circuit according to an aspect of the present invention.

The tube 83 is connected at one end thereof to the tube 81 and at the other end thereof to the tube 58. A valve 80A which is operable to connect or disconnect between the tube 58 and the tube 81 is provided in the tubes 83. Similarly, the tube 84 is connected at one end thereof to the tube 82 and at the other end thereof to the tube 51. A valve 80B which is operable to connect or disconnect between the tube 51 and the tube 82 is provided in the tubes 84. The valves 80A, 80B are electrically connected to the control device (not shown). The tubes 83, 84 correspond to a second connection circuit according to an aspect of the present invention. The valves 80A, 80B as a transfer valve circulate or stop the heat exchange medium in the second connection circuit. The other elements or components of the vehicle air conditioner 10 are the same as those of the vehicle air conditioner 1 and the description of such elements or components will be omitted. The following description will use the same reference numerals for the common elements or components in the first and the second embodiments.

The control device of the vehicle air conditioner 10 operates the third pump P3 with the valves 80A, 80B closed, thereby allowing heat storage medium of the second heat storage device 75 to store exhaust heat of the vehicle system 11. Therefore, when the second heat storage device 75 is disposed under the floor of the compartment CR, it is possible to warm the compartment CR by the heat radiation of the second heat storage device 75 in cold environment.

It is also possible to store temporarily in the heat storage medium of the second heat storage device 75 exhaust heat of the vehicle system 11 that is not released from the radiator 13 to the outside of the vehicle. This can reduce the working load of the radiator 13. When the working load of the radiator 13 is reduced, e.g., when the vehicle is being parked, the control device connects the out-vehicle circuit and the heat storage circuit by opening the valves 80A, 80B, so that heat exchange of the exhaust heat with outside air in the radiator 13 through the heat exchange medium is done, with the result that the exhaust heat stored in the heat storage medium of the second heat storage device 75 is released to the outside of the vehicle. The vehicle air conditioner 10 according to the second embodiment offers the same advantageous effects as those of the vehicle air conditioner 1 according to the first embodiment.

The following will describe a vehicle air conditioner according to the third embodiment of the present invention with reference to FIG. 7. The vehicle air conditioner according to the third embodiment designated by numeral 100 differs from the vehicle air conditioner 1 according to the first embodiment in that a third heat storage device 77 is added to the vehicle air conditioner 1.

The third heat storage device 77 has therein a heat storage medium (not shown) and has formed therein a ninth outlet 77A through which water flow out and an ninth inlet 77B which water flows in. Alternatively, a plurality of the third heat storage devices such as 77 may be provided at different positions in the vehicle. The third heat storage device 77 can be disposed under the floor of the compartment CR or in a trunk. The third heat storage device 77 may be covered with a vacuum heat insulator depending on the location where the third heat storage device 77 is disposed. The heat storage medium in the third heat storage device 77 corresponds to a third heat storage medium.

The tube 91 is connected at one end thereof to the ninth inlet 77B and at the other end thereof to the tube 38 through a three-way valve 90A. One end of the tube 92 is connected to the ninth outlet 77A and the other end of the tube 92 is connected to the first inlet 9B of the vacuum heat insulator 9. Water flows through the tubes 91, 92. A fourth pump P4 is provided in the tube 91 for circulating water. The fourth pump P4 and the three-way valve 90A are electrically connected to the control device (not shown). Alternatively, the fourth pump P4 may be provided in the tube 92. The tubes 91, 92 correspond to a third connection circuit according to an aspect of the present invention. The three-way valve 90A corresponds to a transfer valve according to an aspect of the present invention. The other elements or components of the vehicle air conditioner 100 are the same as those of the vehicle air conditioner 1 and the description of such elements or components will be omitted. The following description will use the same reference numerals for the common elements or components in the first and the third embodiments.

The control device of the vehicle air conditioner 100 sets the three-way valve 90A for connection between the tube 38 and the tubes 91, 92. That is, a part of water flowing through the tube 38 is bypassed by the tubes 91, 92. The control device also activates the fourth pump P4 and a part of water in the tube 38 flows to the third heat storage device 77. Therefore, water heated or cooled in the first heat exchanger 71 or the second heat exchanger 73 flows into the third heat storage device 77 through the ninth inlet 77B. Thus, the heat storage medium in the third heat storage device 77 stores heat of water heated or cooled. Water flowing out from the ninth outlet 77A flows into the first heat storage device 3 through the first inlet 9B.

The third heat storage device 77 is disposed upstream of the first heat storage device 3 (battery package 2) with respect to the water flowing direction in the vehicle air conditioner 100. The third heat storage device 77 receives no influence from heat generated by the battery 7. Accordingly, when cooled water flows into the third heat storage device 77, the heat storage medium in the third heat storage device 77 can store heat whose temperature is less than that of the heat storage medium 17 in the first heat storage device 3. Therefore, the battery 7 and the compartment CR can be cooled effectively for a longer time by using the heat stored in the heat storage medium in the third heat storage device 77. It is also possible to increase temperature of the battery 7 before a start-up of the vehicle in a cold environment by storing heat of water heated in the heat storage medium in the third heat storage device 77. The vehicle air conditioner 100 according to the third embodiment offers the same advantageous effects as those of the vehicle air conditioner 1 according to the first embodiment.

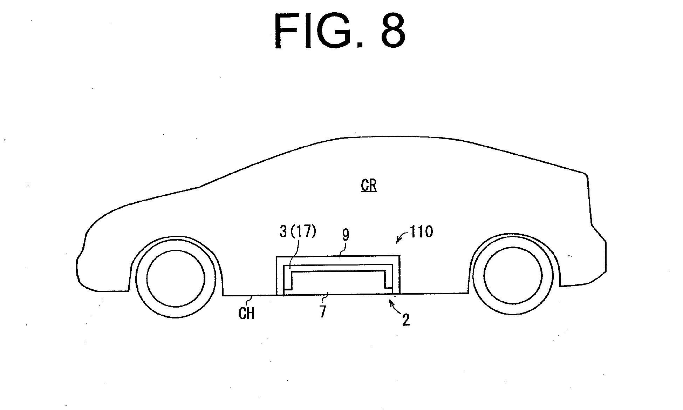

The vehicle air conditioner 110 according to the fourth embodiment shown in FIG. 8 differs from the vehicle air conditioner 1 according to the first embodiment in that the vehicle air conditioner 110 is formed by only the battery package 2 of the vehicle air conditioner 1 according to the first embodiment. In the vehicle air conditioner 110, heat is supplied to the compartment CR from radiation heat of the heat storage medium 17 in the first heat storage device 3 provided under the floor of the compartment CR. As described previously, the vacuum heat insulator 9 on the compartment CR side is made thin. Since heat stored in the heat storage medium 17 is supplied to the compartment CR through the thin vacuum heat insulator 9, the compartment CR can be air-conditioned effectively.

As compared with a case in which the air conditioning is performed only by the refrigerant circuit, the vehicle air conditioner 110 can save energy in air-conditioning the vehicle compartment. Therefore, when the vehicle air conditioner 110 is used for a battery-driven vehicle, the driving distance of the vehicle can be increased. The vehicle air conditioner 110 may dispense with the air duct 21 (refer to FIG. 2), but if the air duct 21 and the electric blower for supplying air in the air duct 21 into the compartment CR are provided, the compartment CR can be air-conditioned more effectively by air in the air duct 21.

The vehicle air conditioner 110 is simplified as compared with the vehicle air conditioners 1, 10, 100. Therefore, the vehicle air conditioner 110 can be made small and a plurality of the vehicle air conditioners 110 may be mounted in the vehicle.

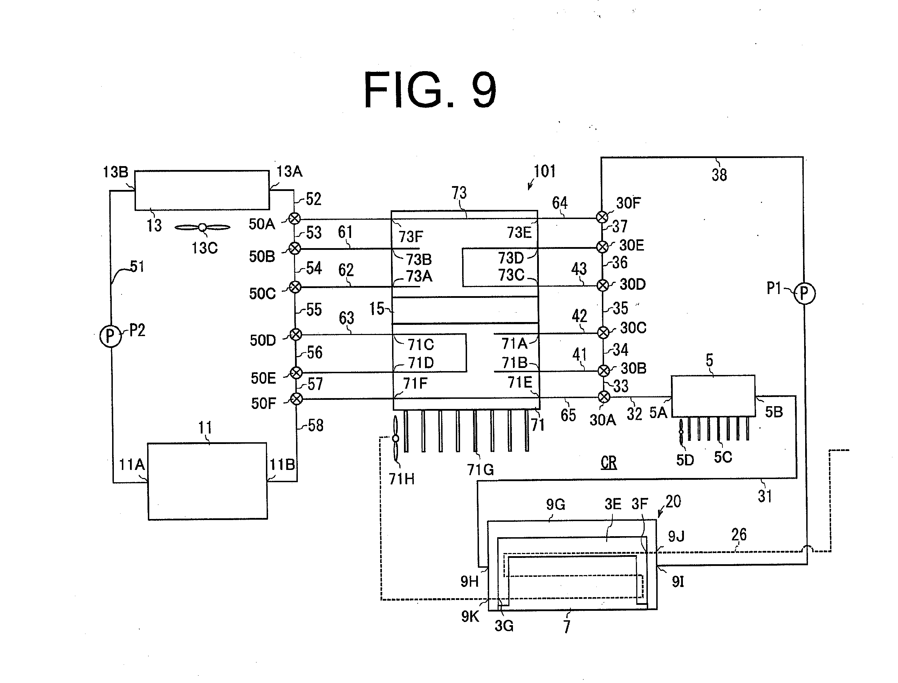

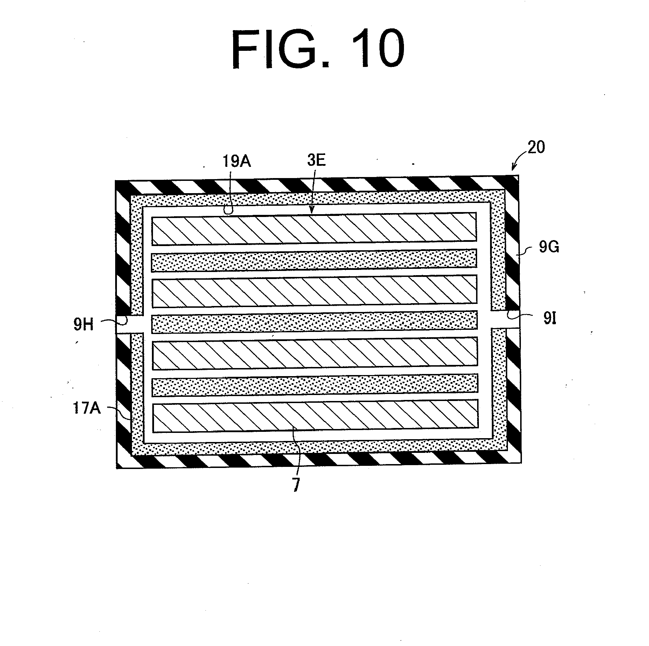

The vehicle air conditioner 101 shown in FIGS. 9 and 10 according to an alternative embodiment differs from the vehicle air conditioner 1 according to the first embodiment in that a battery package 20 and an air duct 26 are used instead of the battery package 2 and the air duct 21 of the vehicle air conditioner 1, respectively.

As shown in FIG. 10, heat storage mediums 17A and the small batteries 7 are alternately disposed in the first heat storage device 3E forming the battery package 20. A passage 19A is formed between the heat storage medium 17A and the small battery 7. The vacuum heat insulator 9G has a first outlet 9H and a first inlet 91 communicating with the passage 19A. As shown in FIG. 9, the first heat storage device 3E has ports 3F, 3G through which the air duct 26 is inserted. The vacuum heat insulator 9G has ports 9J, 9K communicating with the ports 3F, 3G, respectively. The other elements or components of the vehicle air conditioner 101 are the same as those of the vehicle air conditioner 1 and the description of such elements or components will be omitted. The following description will use the same reference numerals for the common elements or components in the battery package 2.

The air duct 26 is inserted through the ports 3F, 3G of the first heat storage device 3E, meanders through the first heat storage device 3E and extends toward the vicinity of the first heat exchanger 71.

The vehicle air conditioner 101 according to the alternative embodiment offers the same advantageous effects as those of the vehicle air conditioner 1 according to the first embodiment. The battery package 20 and the air duct 26 may be applied to the vehicle air conditioners 10, 100, 110 according to the second, the third and the fourth embodiments, respectively. The battery package 20 and the air duct 26 may be applied independently to the above vehicle air conditioners.

The present invention is not limited to the above first through the fourth and the alternative embodiments. The present invention may be applied to other cases within the scope of the present invention as follows.

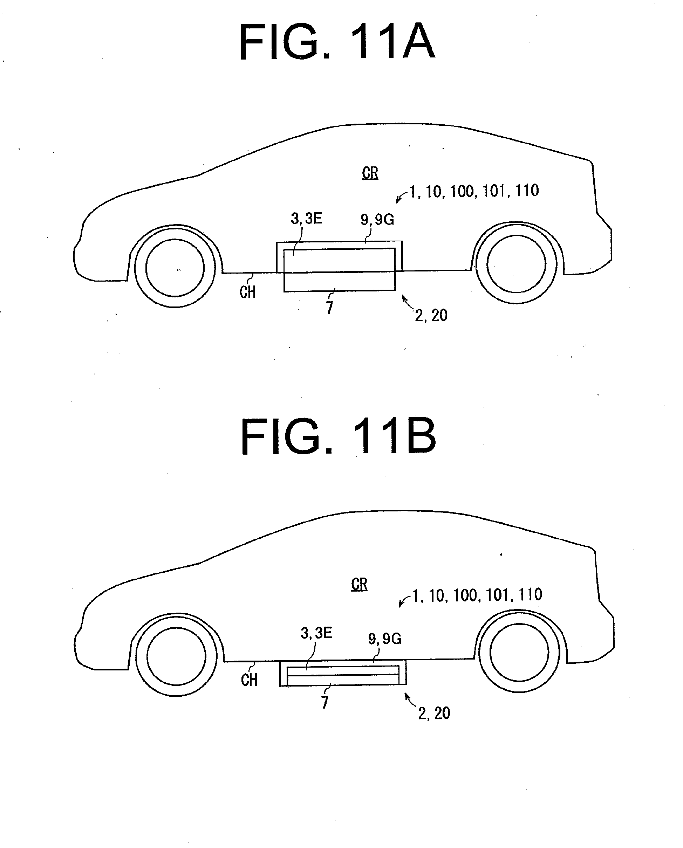

The battery packages 2, 20 of the vehicle air conditioners 1, 10, 100, 101, 110 according to the first through the fourth and the alternative embodiments may be disposed as shown in FIGS. 11A, 11B. Specifically, the first heat storage device 3, 3E and the vacuum heat insulator 9, 9G may be disposed under the floor of the compartment CR and the battery 7 under the chassis CH outside the vehicle, as shown in FIG. 11A. Alternatively, the battery package 2, 20 may be both disposed under the chassis CH, that is outside the vehicle, as shown in FIG. 11B. When the battery package 2, 20 is disposed under the chassis CH as shown in FIG. 11B, the battery 7 and the battery package 2, 20 are preferably covered by any protector to protect against any shock from the outside of the vehicle.

The vehicle air conditioner 10 according to the second embodiment may be provided with the third heat storage device 77, the tubes 91, 92 and the three-way valve 90A.

Temperature sensors may be provided in the tubes 31, 52 and the air duct 21 for detecting the temperatures of water in the tubes 31, 52 and air in the air duct 21. In this case, the control device can control the operation of the Peltier device 15 based on the temperatures of water and air detected by the respective temperature sensors, which will make it possible to warm the battery 7 and to cool the vehicle system 11 more effectively.

A dehumidifier may be provided in the air ducts 21, 26. In this case, air-conditioning the compartment CR can be performed more effectively by dehumidified air.

The vehicle air conditioner according to the present invention can be applied to a vehicle having an internal combustion engine, as well as to a hybrid vehicle and an electric vehicle.

A vehicle air conditioner includes a first heat storage device having a first heat storage medium, a battery disposed under a floor of a compartment of a vehicle on a chassis side and a heat insulator covering the first heat storage device for insulating. The first heat storage device is disposed on and thermally connected to the battery.

## Claims

1. A vehicle air conditioner (1, 10, 100, 101, 110) comprising:
a first heat storage device (3) having a first heat storage medium (17);
a battery (7) disposed under a floor of a compartment of a vehicle on a chassis side (CH); and
a heat insulator (9) covering the first heat storage device (3) for insulating, **characterized in that** the first heat storage device (3) is disposed on and thermally connected to the battery (7).

2. The vehicle air conditioner according to claim 1, **characterized in that** the vehicle air conditioner further comprising:
a heat exchange medium;
an in-vehicle heat exchanger (5) that exchanges heat between the heat exchange medium and air around the in-vehicle heat exchanger (5), wherein the air can be supplied to the compartment; and
an in-vehicle circuit (31 through 38, 41 through 43) which can connect the first heat storage device (3) and the in-vehicle heat exchanger (5) so that the heat exchange medium circulates, wherein the first heat storage device (3) exchanges heat between the first heat storage medium and the heat exchange medium.

3. The vehicle air conditioner according to claim 2, **characterized in that** the vehicle air conditioner further comprising:
a vehicle system (11) generating exhaust heat in the vehicle;
an out-vehicle heat exchanger (13) that exchanges heat between the exhaust heat and outside air through the heat exchange medium;
an out-vehicle circuit (51 through 58, 61 through 63) which connects the vehicle system (11) and the out-vehicle heat exchanger (13) so that the heat exchange medium can circulate;
a first connection circuit (64, 65) connecting the in-vehicle circuit (31 through 38, 41 through 43) and the out-vehicle circuit (51 through 58, 61 through 63) and having a transfer valve (30A, 30F, 50A, 50F) for circulating or stopping the heat exchange medium; and
a Peltier device (15) that can be switched between heat absorption side and heat release side of the Peltier device.

4. The vehicle air conditioner according to claim 3, **characterized in that** the vehicle air conditioner further comprising:
a second heat storage device (75) having a second heat storage medium and exchanging heat between the second heat storage medium and the heat exchange medium;
a heat storage circuit (81, 82) which connects the vehicle system (11) and the second heat storage device (75) so that the heat exchange medium circulates; and
a second connection circuit (83, 84) connecting the out-vehicle circuit (51 through 58, 61 through 63) and the heat storage circuit (81, 82) and having a transfer valve (80A, 80B) for connecting or disconnecting the out-vehicle circuit (51 through 58, 61 through 63) and the heat storage circuit (81, 82).

5. The vehicle air conditioner according to any one of claims 2 through 4, **characterized in that** the vehicle air conditioner further comprising:
a third heat storage device (77) having a third heat storage medium and exchanging heat between the third heat storage medium and the heat exchange medium; and
a third connection circuit (91, 92) connecting the in-vehicle circuit (31 through 38, 41 through 43) and the third heat storage device (77) and having a transfer valve (90A) for circulating or stopping the heat exchange medium.

6. The vehicle air conditioner according to any one of claims 1 through 5, **characterized in that** the heat storage medium stores heat at room temperature range.

7. The vehicle air conditioner according to any one of claims 1 through 6, **characterized in that** the vehicle air conditioner further comprising:
air passage (23, 24) that are formed in the first heat storage device (3) and the battery (7), respectively and communicate with each other, the air passages (23, 24) communicating with the compartment.

8. The vehicle air conditioner according to any one of claims 1 through 7, **characterized in that** the battery (7) is covered with the first heat storage medium.

9. The vehicle air conditioner according to any one of claims 1 through 8, wherein the battery (7) includes a plurality of small batteries and the first heat storage device (3) has a plurality of first heat storage mediums (17A), **characterized in that** the first heat storage mediums and the small batteries are alternately disposed in the first heat storage device (3) thereby to form a passage (19A) therebetween.

10. The vehicle air conditioner according to any one of claims 1 through 9, **characterized in that** the battery (7) is disposed under the chassis (CH) outside the vehicle.
